(19) Europäisches Patentamt
European Patent Office
Office européen des brevets

(11) **EP 3 533 630 A1**

(12) **EUROPEAN PATENT APPLICATION**
published in accordance with Art. 153(4) EPC

(43) Date of publication:
**04.09.2019 Bulletin 2019/36**

(51) Int Cl.:
***B60C 11/16*** *(2006.01)*

(21) Application number: **17864681.6**

(22) Date of filing: **08.06.2017**

(86) International application number:
**PCT/JP2017/021238**

(87) International publication number:
**WO 2018/078942 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.10.2016 JP 2016209210**

(71) Applicant: **TOYO TIRE CORPORATION Itami-shi,**
**Hyogo 6640847 (JP)**

(72) Inventor: **SATOI, Aya**
**Hyogo 664-0847 (JP)**

(74) Representative: **Eisenführ Speiser**
**Patentanwälte Rechtsanwälte PartGmbB**
**Postfach 10 60 78**
**28060 Bremen (DE)**

(54) **STUD PIN AND PNEUMATIC TIRE PROVIDED WITH STUD PIN**

(57) Provided is a stud pin 1 that includes a body 4 and a shaft 5 protruding the body 4. The shaft 5 has a multi-stepped structure that contains plural steps including at least a first step 11 protruding from the body 4 and a second step 12 protruding from the first step 11. The plural steps include an $N^{th}$ step and an $(N + 1)^{th}$ step, in which the positions of the centers of gravity G2 and G3 of their outer shapes are different from each other in a plan view.

FIG. 1

EP 3 533 630 A1

**Description**

TECHNICAL FIELD

The present invention relates to a stud pin, and a pneumatic tire comprising the stud pin.

BACKGROUND ART

Stud pins for pneumatic tires improve the driving performance (including the drive performance, the braking performance, and the turning performance) of a vehicle, on which pneumatic tires and the stud pins are mounted, on icy and snowy road surfaces by scratching and piercing the icy and snowy road surfaces.
The stud pin disclosed in Patent Literature 1 comprises a head or a body, and a pin or a shaft that protrudes from an end surface of the body. In a plan view, one side of the shaft has a discontinuous outline in which at least one tooth is defined.

CITATION LIST

PATENT LITERATURE

[Patent Literature 1] WO 2014/122570 A1

SUMMARY OF INVENTION

TECHNICAL PROBLEM

By allowing edge components of the shaft to effectively function in a specific direction, the driving performance on icy and snowy road surfaces is further improved. However, in conventional stud pins including the one disclosed in Patent Literature 1, no particular consideration is given to allowing edge components of a shaft to more effectively function in a specific direction.
An object of the present invention is to allow edge components of a shaft of a stud pin to more effectively function in a specific direction.

SOLUTION TO PROBLEM

One mode of the present invention provides a stud pin that comprises a body and a shaft protruding from the body, wherein the shaft has a multi-stepped structure that comprises plural steps including at least a first step protruding from the body and a second step protruding from the first step, and the plural steps include an $N^{th}$ step and an $(N + 1)^{th}$ step, in which the positions of the centers of gravity of their outer shapes are different from each other in a plan view.
The outer shapes of the $N^{th}$ step and the $(N + 1)^{th}$ step have different positions of centers of the gravity in a plan view; therefore, there is a direction in which a gap between an edge component of the $N^{th}$ step and an edge component of the $(N + 1)^{th}$ step in a plan view is small. In other words, the gap between these edge components is small in a specific direction. As a result, a scratching effect is more effectively exerted by the edge components in this specific direction, and the driving performance on icy and snowy road surfaces can thereby be improved.
It is preferred that the $(N + 1)^{th}$ step be an endmost step and the $N^{th}$ step be a second endmost step.
The outer shape of the first step in a plan view and that of the second step in a plan view are preferably different.
This constitution makes the directions of edge components of the first step different from the directions of edge components of the second step in a plan view. In other words, the shaft has edge components in multiple directions, and these edge components act in the multiple directions. As a result, the driving performance on icy and snowy road surfaces is further improved.
The number of edge components of the endmost step is preferably larger than the number of edge components of the second endmost step.
Generally speaking, the larger the number of the edge components of a step, the higher is the piercing effect of the step on icy and snowy road surfaces. Further, the endmost step has a higher piercing effect on icy and snowy road surfaces as compared to other steps. Therefore, by setting the number of the edge components of the endmost step to be relatively large, the piercing effect of the shaft on icy and snowy road surfaces can be effectively improved.

ADVANTAGEOUS EFFECTS OF INVENTION

According to the present invention, the scratching effect of the edge components of a shaft of a stud pin can be more effectively exerted in a specific direction, whereby the driving performance on icy and snowy road surfaces can be improved.

BRIEF DESCRIPTION OF DRAWINGS

FIG. 1 is a perspective view illustrating a stud pin according to a first embodiment of the present invention;
FIG. 2 is a plan view illustrating a shaft of the stud pin according to the first embodiment;
FIG. 3 is a partial side view of the stud pin according to the first embodiment, which was taken from the direction of an arrow III of FIG. 1;
FIG. 4 is a developed view of a tread portion of a pneumatic tire on which the stud pin according to the first embodiment is mounted;
FIG. 5 is a conceptual drawing for explaining the definition of the center of gravity;
FIG. 6A is a schematic plan view for explaining the functions of the shaft;
FIG. 6B is a schematic plan view for explaining the functions of the shaft;
FIG. 6C is a schematic plan view for explaining the functions of the shaft;
FIG. 6D is a schematic plan view for explaining the functions of the shaft;
FIG. 7A is a plan view illustrating a shaft of a stud pin according to a second embodiment;
FIG. 7B is a partial side view of the stud pin according to the second embodiment, which was taken in the same manner as FIG. 3;
FIG. 8A is a plan view illustrating a shaft of a stud pin according to a third embodiment;
FIG. 8B is a partial side view of the stud pin according to the third embodiment, which was taken in the same manner as FIG. 3;
FIG. 9A is a plan view illustrating a shaft of a stud pin according to a fourth embodiment;
FIG. 9B is a partial side view of the stud pin according to the fourth embodiment, which was taken in the same manner as FIG. 3;
FIG. 10 is a partial perspective view illustrating a stud pin according to Comparative Example;

DESCRIPTION OF EMBODIMENTS

Embodiments of the present invention will now be described referring to the attached drawings.

(First Embodiment)

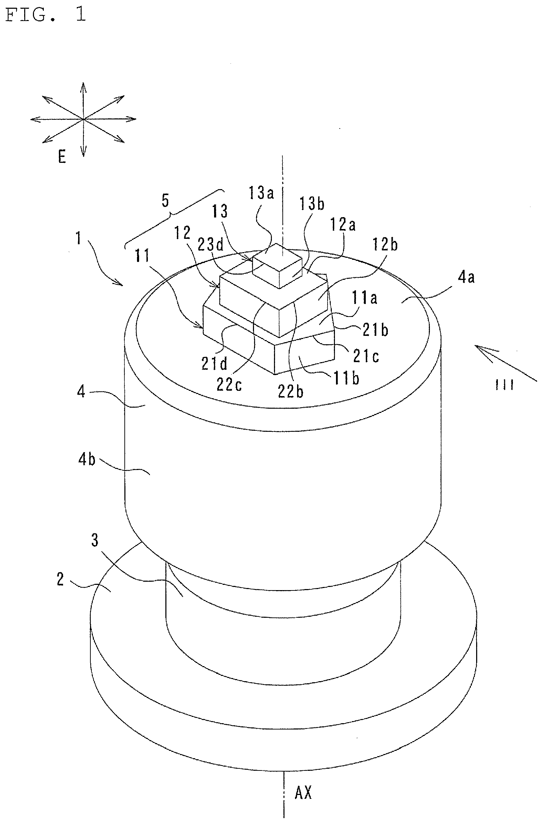

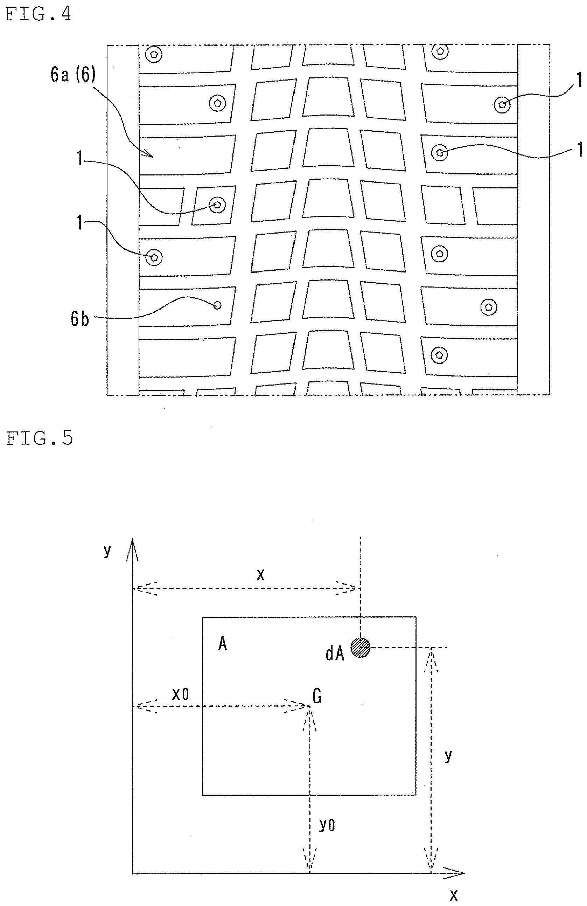

Referring to FIGs. 1 to 3, a stud pin 1 of this embodiment as a whole has a shape that extends along its axis AX. In the following descriptions, the term "plan view" may be hereinafter used for the shape of the stud pin 1 viewed from its tip side along the axis AX.
The stud pin 1 comprises: a base 2 on the bottom-most side; a shank 3 protruding from the base 2; and a body 4 arranged on the tip of the shank 3. The stud pin 1 further comprises a shaft 5 protruding from the body 4.
In this embodiment, the base 2 is substantially disk-shaped, and the body 4 is substantially cylindrical. The shank 3 has a substantially short cylindrical shape having a smaller diameter than the base 2 and the body 4. Further, the base 2, the shank 3 and the body 4 constitute an integrated structure and are made of aluminum or an aluminum alloy. Other structures and other materials can be employed for all of the base 2, the shank 3 and the body 4.
The body 4 comprises an end surface 4a and a side surface 4b. In this embodiment, the end surface 4a is substantially a flat surface that extends perpendicular to the axis AX. The end surface 4a may be inclined with respect to the axis AX and may be a non-flat surface. The shaft 5 protrudes from the end surface 4a of the body 4 in the direction along the axis AX. The outline or outer shape of the shaft 5 in a plan view fits inside a region bounded by the outer shape of the end surface 4a of the body 4 in the plan view. In other words, the area of the outer shape of the shaft 5 in a plan view is smaller than the area of the outer shape of the end surface 4a of the body 4 in the plan view. For example, the area of the former can be set at 10 to 45% of the area of the latter.
In this embodiment, the material of the shaft 5 is tungsten. The shaft 5 is a separate component from the base 2, the shank 3 and the body 4, and is engaged and thereby fixed with the body 4. As for the shaft 5, other material can be employed. The shaft 5 and the body 4 may have an integrated structure as well.
Referring to FIG. 4 in combination, the stud pin 1 is used by being mounted into pin holes 6b that are formed on a tread portion 6a of a pneumatic tire 6. The base 2 and the shank 3 are entirely housed in each pin hole 6b. The body 4 is housed in each pin hole 6b with its end surface 4a and the shaft 5 being exposed on the tread portion 6.

The shaft 5 has a multi-stepped structure comprising plural steps. In this embodiment, the shaft 5 comprises three steps, namely a first step 11, a second step 12 and a third step 13. The first to the third steps 11, 12 and 13 of the shaft 5 comprise end surfaces 11a, 12a and 13a, and side surfaces 11b, 12b and 13b, respectively. The step on the bottom-most side, namely the first step 11, protrudes from the end surface 4a of the body 4. Further, the intermediate step, namely the second step 12, protrudes from the end surface 11a of the first step 11. Still further, the endmost step, namely the third step 13, protrudes from the end surface 12a of the second step 12. The shaft 5 may have four or more steps.

The total height of the shaft 5 (in this embodiment, the height from the end surface 4a of the body 4 to the end surface 13a of the third step 13) can be set at, for example, 0.5 mm to 3 mm. In addition, the ratio of a sum of the heights of the steps other than the first step 11 (in this embodiment, a sum of the heights of the second and the third steps 12 and 13) with respect to the total height of the shaft can be set at, for example, 10% to 90%.

In the first to the third steps 11, 12 and 13 of the shaft 5, the end surfaces 11a, 12a and 13a in a plan view have larger outer shapes toward the side of the body 4, namely the base-end side. Conversely, in the first to the third steps 11, 12 and 13 of the shaft 5, the end surfaces 11a, 12a and 13a in a plan view have smaller outer shapes toward the tip side. Accordingly, the shaft 5 as a whole constitutes a pointed protrusion that protrudes in a stepped manner from the end surface 4a of the body 4.

In this embodiment, the end surfaces 11a, 11b and 11c of the first to the third steps 11, 12 and 13 are substantially flat surfaces that extend perpendicular to the axis AX. The end surfaces 11a, 11b and 11c may be inclined with respect to the axis AX and may be non-flat surfaces.

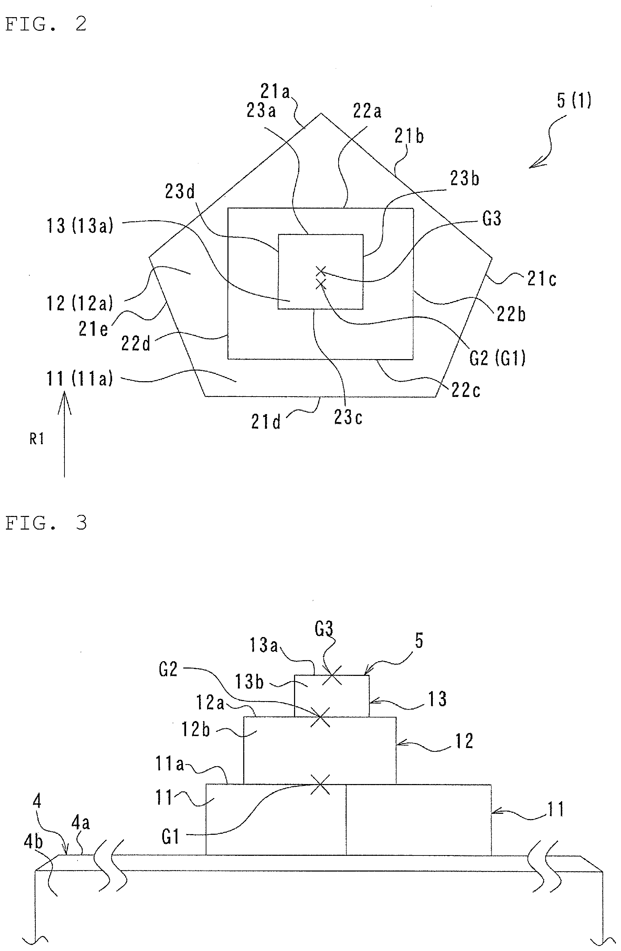

As most clearly illustrated in FIG. 2, the outer shapes of the end surfaces 11a, 12a and 13a of the first to the third steps 11, 12 and 13 in a plan view are pentagonal, quadrangular and quadrangular, respectively. In the first step 11 whose end surface 11a is pentagonal, five sides and edge components 21a, 21b, 21c, 21d and 21e are formed by the end surface 11a and the side surface 11b. Further, in the second step 12 whose end surface 12a is quadrangular, four sides and edge components 22a, 22b, 22c and 22d are formed by the end surface 12a and the side surface 12b. Moreover, in the third step 13 whose end surface 13a is quadrangular, four sides and edge components 23a, 23b, 23c and 23d are formed by the end surface 13a and the side surface 13b. In this embodiment, the edge components 21a to 21e, 22a to 22d and 23a to 23d are linear. However, these edge components 21a to 21e, 22a to 22d and 23a to 23d are not required to be linear in a geometrically strict sense and may be curved or tortuous to a certain extent as long as a scratching effect on icy and snowy road surfaces is attained. In addition, these edge components 21a to 21e, 22a to 22d and 23a to 23d may be chamfered as long as a scratching effect on icy and snowy road surfaces is attained.

Next, the centers of gravity G1, G2 and G3 of the outer shapes of the end surfaces 11a, 12a and 13a in a plan view of the first to the third steps 11, 12 and 13 will be described. Referring to FIG. 5, in the present specification, the center of gravity G (x0, y0) of an area A in a plan view is defined by the following formulae.

$$x0 = \frac{S_y}{A}, \quad y0 = \frac{S_x}{A}$$

The Symbols $S_x$ and $S_y$ each represent an area moment and are defined by the following formulae.

$$S_x = \int_A y\,dA, \quad S_y = \int_A x\,dA$$

As illustrated in FIGs. 2 and 3, the center of gravity G3 of the end surface 13a of the third step 13 which is the endmost step is arranged at a position that is shifted to the upper side in FIG. 2 with respect to the center of gravity G2 of the end surface 12a of the second step 12 which is the second endmost step. In other words, the position of the center of gravity G3 of the end surface 13a of the third step 13 and the position of the center of gravity G2 of the end surface 12a of the second step 12 are different from each other.

Since the positions of the centers of gravity G2 and G3 are different from each other, the gap between the edge component 22a of the second step 12 and the edge component 23a of the third step 13 in a plan view is smaller than the gap between the edge component 22c of the second step 12 and the edge component 23c of the third step in the plan view. In other words, by shifting the center of gravity G3 of the third step 13 to the upper side in the drawing with respect to the center of gravity G2 of the second step 12, the gap between the edge component 22a of the second step 12 and the edge component 23a of the third step 13 in a plan view is made smaller in the upward direction of the drawing.

When the stud pin 1 is mounted on the tread portion 6a such that the rotational direction of the pneumatic tire 6 is oriented in the direction indicated by an arrow R1 of FIG. 2 with respect to the shape of the shaft 5 in a plan view, the gap between the edge component 22a of the second step 12 and the edge component 23a of the third step 13 in the plan view is small; therefore, immediately after the edge component 23a scratches an icy and snowy road surface, the edge component 22a also scratched the icy and snowy road surface. As a result, the scratching effect attributed to edge components is more effectively exerted by the edge components 22a and 23a, so that the driving performance on the icy and snowy road surface can be improved.

In this embodiment, the center of gravity G1 of the end surface 11a of the first step 11 and the center of gravity G2 of the end surface 12a of the second step 12 are substantially aligned with each other. However, the positions of the centers of gravity G1 and G2 may be different from each other. When the positions of the centers of gravity G1 and G2 are different, the positions of the centers of gravity G2 and G3 may be different from each other, or may be substantially aligned with each other. In short, by configuring the shaft 5 to include an $N^{th}$ step and an $(N + 1)^{th}$ step whose outer shapes have different positions of the centers of gravity in a plan view of plural steps, a gap of the edge components in a specific direction is made small, whereby an effect of improving the scratching effect in the specific direction can be attained.

The shaft 5 of the stud pin 1 mounted on the pneumatic tire 6 first scratches an icy and snowy road surface with the third step 13 which is the endmost step, and the second step 12 which is the second endmost step subsequently further scratches the icy and snowy road surface. Therefore, as in this embodiment, by allowing the position of the center of gravity G3 of the third step 13 to be different from that of the center of gravity G2 of the second step 12, the scratching effect attributed to the edge components can be more effectively improved.

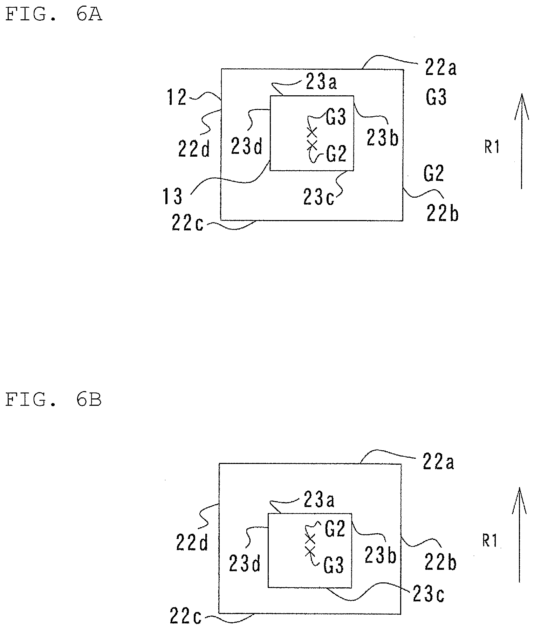

Referring to FIG. 6A, when the center of gravity G3 of the third step 13 is shifted along a rotational direction R1 of the pneumatic tire 1 with respect to the center of gravity G2 of the second step 12, the edge component 22a of the second step 12 and the edge component 23a of the third step 13, which have a small gap therebetween, are put on the leading side. Accordingly, in this case, the different positions of the centers of gravity G2 and G3 effectively contribute to an improvement of the drive torque.

Referring to FIG. 6B, when the center of gravity G3 of the third step 13 is shifted in the opposite direction of the rotational direction R1 with respect to the center of gravity G2 of the second step 12, the edge component 22a of the second step 12 and the edge component 23a of the third step 13, which have a small gap therebetween, are put on the trailing side. Accordingly, in this case, the different positions of the centers of gravity G2 and G3 effectively contribute to an improvement of the braking force.

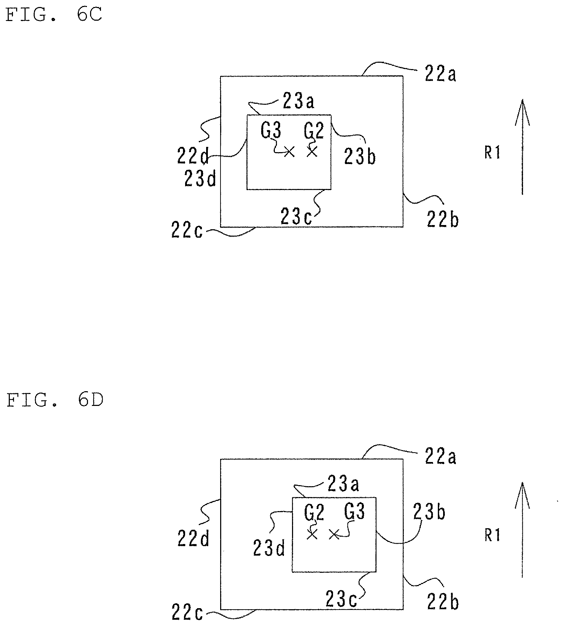

Referring to FIGs. 6C and 6D, when the center of gravity G3 of the third step 13 is shifted in a direction perpendicular to the rotational direction R1 with respect to the center of gravity G2 of the second step 12, the edge component 22a of the second step 12 and the edge component 23a of the third step 13, which have a small gap therebetween, effectively function as a resistance against a lateral force.

As described above, the end surface 11a of the first step 11 has a pentagonal planar shape, and the end surface 12a of the second step 12 has a quadrangular planar shape. In other words, the first step 11 and the second step 12 of the shaft 5 are different in terms of the outer shapes of their end surfaces 11a and 12a in a plan view. Accordingly, the edge components 21a to 21d of the first step 11 and the edge components 22a to 22d of the second step 12 have different orientations in a plan view. More specifically, in a plan view, none of the edge components 22a to 22d of the second step 12 is parallel to any of the edge components 21a to 21e of the first step 11. In other words, as conceptually illustrated with a symbol E in FIG. 1, the shaft 5 has edge components oriented in multiple directions, and these edge components act in the multiple directions. As a result, the driving performance on icy and snowy road surfaces is improved.

The first step 11 has five edge components 21a to 21e, and the second step 12 has four edge components 22a to 22d. In addition, the end surface 12a of the second step 12 is smaller than the end surface 11a of the first step 11. Generally speaking, when the end surfaces of steps have the same size, the larger the number of edge components, the shorter is the length of each edge component. Accordingly, by setting the number of the edge components of the first step 11 having the relatively large end surface 11a to be relatively large, the edge components 21a to 21e can be ensured in multiple directions while securing the lengths of the individual edge components 21a to 21e. Moreover, by setting the number of the edge components of the second step 12 having the relatively small end surface 12a to be relatively small, the edge components 22a to 22d can be ensured in directions different from the directions of the edge components 21a to 21e of the first step 11 while securing the lengths of the individual edge components 22a to 22d. As a result, the driving performance on icy and snowy road surfaces is further improved as compared to a case where the outer shape of the end surface 11a of the first step 11 and that of the end surface 12a of the second step 12 are simply different.

When the stud pin 1 is mounted on the tread portion 6a such that the rotational direction of the pneumatic tire 6 is oriented in the direction indicated by the arrow R1 of FIG. 2 with respect to the shape of the shaft 5 in a plan view, a pointed part 31g, which is formed at the junction of the edge components 21a and 21b of the first step 11, is positioned on the leading side. Therefore, the piercing effect of the pointed part 31g on icy and snowy road surfaces effectively contributes to an improvement of the drive torque. Further, in this case, the edge component 21d of the first step 11, the edge component 22c of the second step 12 and the edge component 23c of the third step 13 are positioned on the trailing side. Therefore, the scratching effect of these edge components 21d, 22c and 23c on icy and snowy road surfaces effectively contributes to an improvement of the braking force.

Other embodiments of the present invention will now be described. With regard to these embodiments, structures and functions that are not particularly mentioned are the same as in the first embodiment. Further, in the drawings relating to these embodiments, the same symbols are assigned to those elements that are identical or similar to the corresponding elements of the first embodiment.

(Second Embodiment)

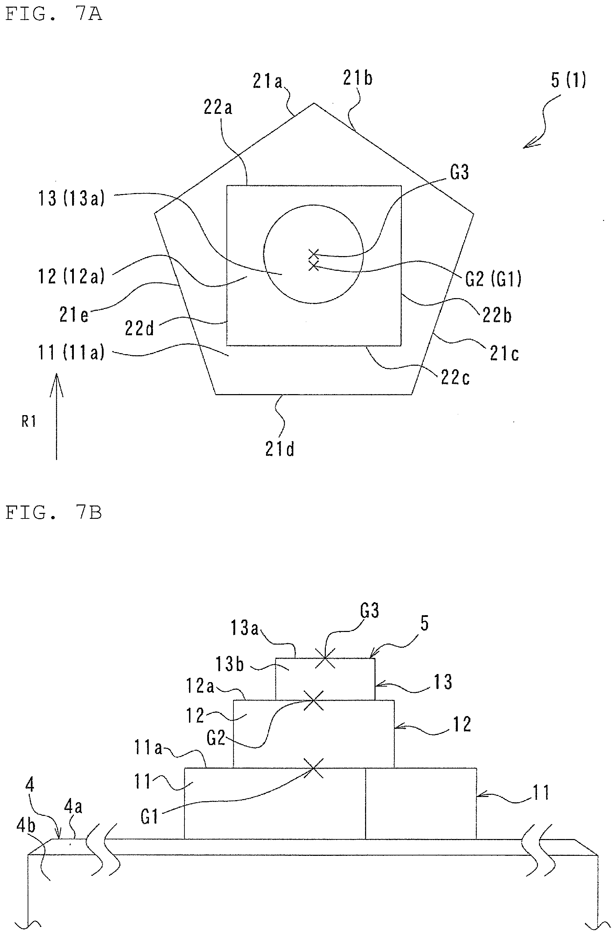

In the stud pin 1 according to the second embodiment that is illustrated in FIGs. 7A and 7B, the outer shapes of the end surfaces 11a to 13a of the first to the third steps 11 to 13 in a plan view are pentagonal, quadrangular and circular, respectively. The first step 11 comprises five edge components 21a to, 21e, and the second step 12 comprises four edge components 22a to 22d. The number of the edge components of the third step 13 that is circular can be regarded as infinity.

In FIG. 7A, the center of gravity G3 of the third step 13 is shifted upward with respect to the center of gravity G2 of the second step 12, making the positions of the centers of gravity G2 and G3 different from each other.

As described above, the end surface 13a of the third step 13 which is the endmost step is circular, and the number of its edge components can be regarded as infinity. Further, the end surface 12a of the second step 12, which is the second endmost step, is quadrangular and has four edge components 22a to 22d. In other words, the number of the edge components of the third step 13, which is the endmost step, is larger than the number of the edge components 22a to 22d of the second step 12, which is the second endmost step.

With regard to the first to the third steps 11 to 13, each step exerts a higher piercing effect on icy and snowy road surfaces as the number of the edge components increases. Moreover, the third step 13, which is the endmost step, exerts a higher piercing effect on icy and snowy road surfaces as compared to the first and the second steps 11 and 12. Therefore, by setting the number of the edge components of the third step 13, which is the endmost step, to be larger than the number of the edge components of the second step 12, the piercing effect of the shaft 5 on icy and snowy road surfaces can be effectively improved, and the driving performance on icy and snowy road surfaces can thereby be improved.

The first step 11 and the second step 12 have different outer shapes in a plan view, and the number of the edge components of the second step 12 is four, which is less than the number of the edge components of the first step 11 that is five.

(Third Embodiment)

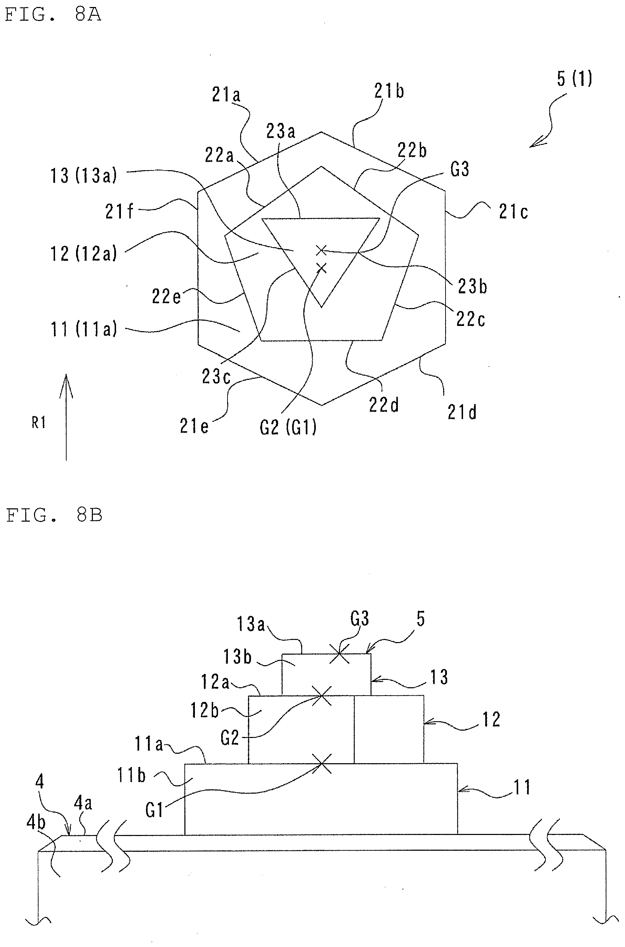

In the stud pin 1 according to the third embodiment that is illustrated in FIGs. 8A and 8B, the outer shapes of the end surfaces 11a to 13c of the first to the third steps 11 to 13 in a plan view are hexagonal, pentagonal and triangular, respectively. The first step 11 comprises six edge components 21a to 21f, and the second step 12 comprises five edge components 22a to 22e. Further, the third step 13 comprises three edge components 23a to 23c.

In FIG. 7A, the center of gravity G3 of the third step 13 is shifted upward with respect to the center of gravity G2 of the second step 12, making the positions of the centers of gravity G2 and G3 different from each other.

The first step 11 and the second step 12 have different outer shapes in a plan view, and the number of the edge components of the second step 12 is five, which is less than the number of the edge components of the first step 11 that is six.

(Fourth Embodiment)

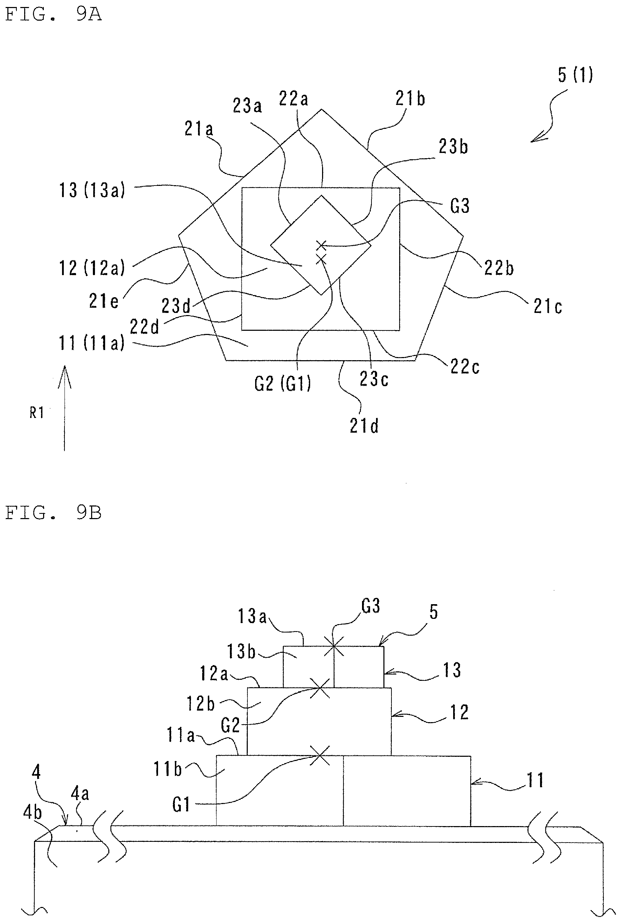

In the stud pin 1 according to the fourth embodiment that is illustrated in FIGs. 9A and 9B, the outer shapes of the end surfaces 11a to 13c of the first to the third steps 11 to 13 in a plan view are pentagonal, quadrangular and quadrangular, respectively. The first step 11 comprises five edge components 21a to 21e, and the second step 12 comprises four edge components 22a to 22d. Further, the third step 13 comprises four edge components 23a to 23d.

In FIG. 7A, the center of gravity G3 of the third step 13 is shifted upward with respect to the center of gravity G2 of the second step 12, making the positions of the centers of gravity G2 and G3 different from each other.

The first step 11 and the second step 12 have different outer shapes in a plan view, and the number of the edge components of the second step 12 is four, which is less than the number of the edge components of the first step 11 that is five.

(Evaluation Test)

As shown in Table 1 below, the stud pins of Comparative Example and the first to the fourth embodiments (which were all brand new) were tested to evaluate the drive performance, the braking performance and the turning performance.

As test tires, tires having a size of 195/65R15 and an air pressure Fr/Re of 220/220 (kPa) were used. In this evaluation test, the test tires were mounted on a test vehicle (1,500 cc, 4WD mid-size sedan), and this test vehicle was driven on an icy road surface. For the evaluation of the edge performance, the first to the fourth embodiments were each evaluated as an index, taking the edge performance of Comparative Example as 100. The drive performance was evaluated in terms of the time required for the test vehicle to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

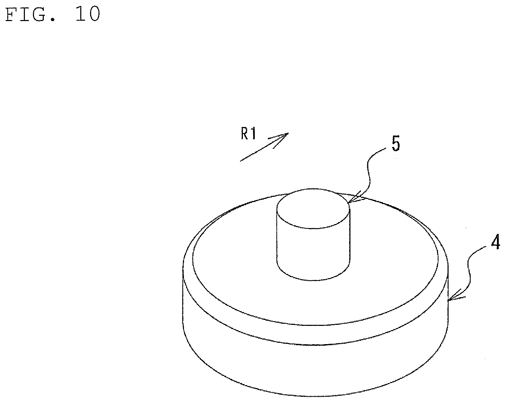

As illustrated in FIG. 10, the stud pin 1 of Comparative Example has a shaft 5 constituted by a single cylinder, not by a multi-stepped structure. For all of Comparative Example and the first to the fourth embodiments, the stud pins 1 were mounted on the test tire such that the tire rotational direction was oriented in the direction indicated by the arrow R1 in the drawings.

[Table 1]

| | Comparative Example | First embodiment (FIGs. 2 and 3) | Second embodiment (FIGs. 7A and 7B) |
|---|---|---|---|
| Shaft shape | Cylindrical | First step: pentagonal<br>Second step: quadrangular<br>Third step: quadrangular | First step: pentagonal<br>Second step: quadrangular<br>Third step: circular |
| Drive performance | 100 | 105 | 104 |
| Braking performance | 100 | 109 | 105 |
| Turning performance | 100 | 103 | 106 |
| | Third embodiment (FIGs. 8A and 8B) | Fourth embodiment (FIGs. 9A and 9B) | |
| Shaft shape | First step: hexagonal<br>Second step: pentagonal<br>Third step: triangular | First step: pentagonal<br>Second step: quadrangular<br>Third step: quadrangular | |
| Drive performance | 107 | 106 | |
| Braking performance | 108 | 106 | |
| Turning performance | 109 | 107 | |

The first to the fourth embodiments, in which the positions of the centers of gravity G2 and G3 of the second and the third steps 12 and 13 were different, exerted superior performance than Comparative Example for all of the drive performance, the braking performance and the turning performance.

DESCRIPTION OF SYMBOLS

| 1: | stud pin |
|---|---|
| 2: | base |

| 3: | shank |
| 4: | body |
| 4a: | end surface |
| 4b: | side surface |
| 5: | shaft |
| 11: | first step |
| 11a: | end surface |
| 11b: | side surface |
| 12: | second step |
| 12a: | end surface |
| 12b: | side surface |
| 13: | third step |
| 13a: | end surface |
| 13b: | side surface |
| 6: | pneumatic tire |
| 6a: | tread portion |
| 6b: | pin hole |
| 21a, 21b, 21c, 21d, 21e, 21f: | edge component |
| 22a, 22b, 22c, 22d: | edge component |
| 23a, 23b, 23c, 23d: | edge component |
| 31f: | pointed part |
| G1, G2, G3: | center of gravity |

## Claims

1. A stud pin comprising:

   a body; and
   a shaft protruding from the body, wherein
   the shaft has a multi-stepped structure that comprises plural steps including at least a first step protruding from the body and a second step protruding from the first step, and
   the plural steps include an $N^{th}$ step and an $(N + 1)^{th}$ step, in which the positions of the centers of gravity of their outer shapes are different from each other in a plan view.

2. The stud pin according to claim 1, wherein
   the $(N + 1)^{th}$ step is an endmost step, and
   the $N^{th}$ step is a second endmost step.

3. The stud pin according to claim 1 or 2, wherein the outer shape of the first step in a plan view and that of the second step in a plan view are different.

4. The stud pin according to any one of claims 1 to 3, wherein the number of edge components of the endmost step is larger than the number of edge components of the second endmost step.

FIG. 1

FIG. 2

FIG. 3

FIG.4

FIG.5

FIG. 6A

FIG. 6B

FIG. 6C

FIG. 6D

FIG. 7A

FIG. 7B

FIG. 8A

21a  21b

22a  23a  22b  G3

13 (13a)  5 (1)

21f  21c

12 (12a)  23b

22e  22c

11 (11a)  23c

R1  21e  22d  21d

G2 (G1)

FIG. 8B

13a  G3  5

13b  13

12a  12

12b

G2

11a  11

11b

4  11

4a  G1

4b

FIG. 9A

FIG. 9B

FIG. 10

## INTERNATIONAL SEARCH REPORT

International application No.

PCT/JP2017/021238

A. CLASSIFICATION OF SUBJECT MATTER
*B60C11/16*(2006.01)i

According to International Patent Classification (IPC) or to both national classification and IPC

B. FIELDS SEARCHED

Minimum documentation searched (classification system followed by classification symbols)
B60C11/16

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP 1798068 A2  (SCASON OY), 20 June 2007 (20.06.2007), paragraphs [0001], [0016] to [0020]; each drawing & DE 602006009362 D     & EA 200602102 A & AT 443619 T            & FI 20055678 A0 | 1–4 |
| A | JP 58-36708 A  (Toshio TAKAYAMA), 03 March 1983 (03.03.1983), entire text; all drawings (Family: none) | 1–4 |

| ☒ | Further documents are listed in the continuation of Box C. | ☐ | See patent family annex. |

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 August 2017 (24.08.17) | 05 September 2017 (05.09.17) |

| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

**EP 3 533 630 A1**

**INTERNATIONAL SEARCH REPORT**

International application No.

PCT/JP2017/021238

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 28312/1983(Laid-open No. 133301/1984) (The Yokohama Rubber Co., Ltd.), 06 September 1984 (06.09.1984), pages 5 to 8; each drawing (Family: none) | 1-4 |
| A | JP 2015-501748 A (Compagnie Generale des Etablissements Michelin), 19 January 2015 (19.01.2015), paragraph [0040]; fig. 5 & US 2014/0338806 A1 paragraph [0066]; fig. 5 & WO 2013/072303 A1 & EP 2780179 A1 & FR 2982529 A1 & CA 2854058 A & CN 103930286 A & KR 10-2014-0099489 A & RU 2014124162 A | 1-4 |
| A | JP 62-20705 A (Director General, Agency of Industrial Science and Technology), 29 January 1987 (29.01.1987), entire text; all drawings (Family: none) | 1-4 |

Form PCT/ISA/210 (continuation of second sheet) (January 2015)

**EP 3 533 630 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014122570 A1